# EUROPEAN PATENT SPECIFICATION

(11) **EP 1 937 420 B1**
(45) Date of publication and mention of the grant of the patent: **16.03.2016**
(21) Application number: 06794990.9
(22) Date of filing: 17.10.2006
(51) Int. Cl.: B07B 1/42, B07B 1/46, B07B 13/18, B01D 33/03

(54) **SHALE SHAKER AND METHOD OF TREATING MATERIAL**
SCHIEFERSCHÜTTELVORRICHTUNG UND VERFAHREN ZUM BEHANDELEN VON MATERIAL
TAMIS VIBRANT ET PROCÉDÉ DE TRAITEMENT DE MATÉRIAU

(30) Priority: 20.10.2005 US 255159
(43) Date of publication of application: 02.07.2008
(73) Proprietor: National Oilwell Varco, L.P., Houston, TX 77036 (US)
(72) Inventor: SCOTT, Eric, Conroe, Texas 77302 (US); SMITH, George, Edward, Missouri City, Texas 77459-3642 (US); STONE, Lyndon, Ray, Humble, Texas 77346 (US); PADALINO, Norman, Montgomery, Texas 77356 (US); MCDONOUGH, Kevin, The Woodlands, Texas 77382 (US); SEYFFERT, Kenneth, Wayne, Houston, Texas 77018 (US); KOEDERITZ, William, L, Cedar Park, Texas 78613 (US); GUGGARI, Mallappa Ishwarappa, Cedar Park, Texas 78613 (US); MCCLUNG III, Guy, Lamont, Spring, Texas 77379 (US)
(74) Representative: Lucas, Brian Ronald
(86) International application number: PCT/GB2006/050333
(87) International publication number: WO 2007/045924

(56) References cited:
- WO-A-98/16328
- WO-A-02/080043
- DE-C1- 3 611 234
- GB-A- 498 523
- GB-A- 2 081 026
- US-B2- 6 543 620
- US-B2- 6 868 972

## Description

The present invention relates to a shale shaker and a method for treating material.

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328.

Shale shakers generally comprise an open bottomed basket having one open discharge end and a solid walled feed end. A number of rectangular screens are arranged in the basket, which are held in C-channel rails located on the basket walls, such as those disclosed in GB-A-2,176,424. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces the solids to move along the screens towards the open discharge end. Drilling mud passes through the screens. The recovered drilling mud is received in the receptor for further processing and the solids pass over the discharge end of the basket into the ditch or skip. Various motions can be induced in the screens by altering the position, number and arrangement of offset clump weights to induce circular motion, unbalanced elliptical motion, linear motion and balanced elliptical motion.

Circular motion is generally created by having a single rotor having offset clump weights on each end of the rotor, the rotor arranged on the centre of gravity of the basket, the rotor arranged perpendicular to the direction of flow of material from the feed to the discharge end of the shale shaker.

Unbalanced elliptical motion is induced by moving the rotor away from the centre of gravity, which induces elliptical motion at the feed end of screen with the long axis of the ellipse pointing towards the discharge end, circular at the centre of the screen and elliptical motion towards the discharge end of the screen with the long axis of the ellipse directed towards the feed end.

Linear lotion is induced by having two such rotors arranged above and forward of the centre of gravity of the basket, arranged at 35 to 50 degrees to the horizontal, wherein perpendicular of the plane of the rotors taken at a central point between the two rotors passes through the centre of gravity of the basket. This induces a linear motion in the screen at an angle of approximately 45 degrees from the horizontal. This arrangement is generally found in shale shakers with screens arranged uphill, such that a pool of drilling fluid is maintained on the screen. The solids are "walked out of the pond" using the linear motion induced in the screens.

Balanced elliptical motion is induced with an arrangement of motors shown in as disclosed in GB-A-2,318,401. This arrangement induces elliptical motion with the long axis of the ellipse at approximately 45 degrees to the horizontal at substantially every point along the screen from the feed end to the discharge end.

WO 2005/105327 discloses a vibratory separator for screening solids laden drilling mud, said vibratory separator comprising at least one screen arranged in a basket isolated from a base, vibratory apparatus for vibrating said at least one screen and means for adjusting the angle of said at least one screen, such that in use solids laden drilling mud forms a pool on said at least one screen, the pool having a surface, the surface having a trailing edge defining a beach characterised in that a measuring device is arranged to measure a distance related to the position of the surface to assess the length of said beach. The beach length is maintained by changing the uphill angle of the screen.

WO 2005/105327 also discloses vibratory separator for screening solids laden drilling mud, said vibratory separator comprising at least one screen arranged in a basket isolated from a base, vibratory apparatus for vibrating said at least one screen and means for adjusting the angle of said at least one screen, such that, in use solids laden drilling mud forms a pool on said at least one screen, the pool having a surface, the surface having a trailing edge defining a beach characterised in that said vibratory apparatus comprises a variable frequency drive or an inverter and control apparatus to control said variable frequency drive or inverter for driving the screen in at least one motion profile.

GB-A-498, 523 discloses a machine in accordance with the preamble of claim 1 and a method in accordance with the preamble of claim 41 for separating solids from liquids, such as coals and sludges. The machine comprises an adjustably inclined screen, adjustable between 3 and 7 degrees. The screen comprises a screening cloth over lying a perforate screening plate having side walls. The screen is suspended from flexible coil springs. An electric vibratory motor is arranged above the screen. A vibratable element of the electric vibratory motor vibration motor is attached to the side plates. A body of the motor and the vibrateable element form a line which is at an acute angle to the plane of the plate. The electric vibratory motion induces oscillations in the screen. A weir is located at a lower end of the screen. The oscillations are cyclic harmonic vibrations in the order of 3000 per minute having a right angle and parallel component, the parallel component directed towards the upper edge of the plate. Sludge will pass through the screen and solid particles of coal will migrate over the upper edge in a relatively dry condition. Some liquid will pass over the weir.

US-A-6,868,972 discloses a vibratory separator for screening solids laden drilling mud, the vibratory separator having an electric motor driving unbalanced weights to induce vibratory motions in a screen in a basket arranged on springs.

GB-A-2,081,026 discloses an electromagnetic vibrating system for conveying and screening apparatus.

WO 02/080043 discloses a method for collecting information via various sensors located on mineral extraction machinery.

DE 36 11 234 discloses a machine for screening solids, such as gravel, the machine having an adjustable rake bed.

US-B2-6,543,620 Allaei, discloses a screening machine for use in mining, the screening machine comprising a screen and transducers to vibrate the screen. The transducers may be piezoelectric devices. At least one of the transducers may be used as a sensor to provide feedback for operational control.

WO 98/16328 discloses a vibratory separator for separating solids from solids laden drilling fluids, the vibratory separator having an inclined screen, a scalping screen located thereabove and an intermediate screen or deflector all arranged in a basket arranged on springs. A vibratory mechanism comprising two parallel rotors with offset weights driven by electric motors mounted on the basket for inducing oscillations in the basket to induce solids on the screen to migrate upwardly along the screen to a discharge end.

According to the present invention, there is provided a shale shaker for separating solids from a solids laden fluid in accordance with the claim 1. Thus a motive force is required to move the solids out of a pool which forms on the uphill screen. The motion induced by the electromagnetic vibratory apparatus facilitates movement of the solids.

The control apparatus obtains information from a sensor apparatus and uses that information to base an instruction to send to the shale shaker to adjust its operation. The control apparatus can change the frequency to maintain vibration of the basket at a natural resonant frequency of the basket. As discussed in the description herein, a lot less power is needed to drive the basket at its natural resonant frequency. Thus feeding back information to the control apparatus about the natural resonant frequency during differing loads is an important aspect of the invention, and then controlling the speed of the drive accordingly. This can be carried out very effectively with an electromagnetic vibratory apparatus, as it can change speed of vibration very quickly. The sensor apparatus may comprise a plurality of sensor apparatuses.

Preferably, the basket comprises springs, the basket movably arranged on the springs, the control apparatus for controlling the frequency of the driving apparatus to maintain vibration of the basket at the natural resonant frequency when in use. Advantageously, the springs comprise a coiled spring. Preferably, the springs comprise a leaf spring. Advantageously, the springs comprise at least one coiled spring and at least one leaf spring.

Preferably, the basket comprises resonators, the basket movably arranged on the resonators, the control apparatus for controlling the frequency of the driving apparatus to maintain vibration of the basket at the natural resonant frequency when in use.

Advantageously, the driving apparatus comprises variable frequency drive apparatus for selectively driving the electromagnetic vibratory apparatus at a selected frequency. Advantageously, the control apparatus is for automatically signalling the drive apparatus to change the frequency of the electromagnetic vibratory apparatus so that force applied to the basket is changed.

Advantageously, the control apparatus controls the driving apparatus to drive the electromagnetic vibratory apparatus to de-plug the screen apparatus. Preferably, the control apparatus includes interface apparatus for an interface between on-site personnel at a location of the shale shaker and an entity remote therefrom.

Advantageously, sensor apparatus is connected to the shale shaker for sensing a parameter indicative of operation of the shale shaker for providing a signal corresponding to said parameter, and the control apparatus for receiving signals from the sensor apparatus, for controlling the shale shaker based on said signals. Preferably, the control apparatus is for monitoring and analyzing a plurality of signals from the sensor apparatus and for transmitting signals indicative of information related to operation of the vibratory separator to a processor, the processor including a set of health check rules for health checks comprising logical rules, inputs and outputs for defining events associated with the status of the vibratory separator, the processor for determining a severity code for each event and for reporting the events and severity codes to a central server, the events reported by the processor to the central server in a protocol defining a data structure, the data structure comprising a hierarchical tree node structure wherein results from application of the health check rules are a bottommost node of the tree node structure, and displaying the event severity codes on a display. Advantageously, the processor is for providing information to the central server which results as records containing node information regarding an appropriate location for the results in the tree node structure. Preferably, the control apparatus runs health checks in real time to provide results regarding on-going status of the vibratory separator.

Advantageously, the control apparatus indicates a potential failure of the shale shaker. Preferably, the control apparatus can automatically shut down the vibratory separator based on a parameter of the material or based on the flow rate of the material.

Preferably, the electromagnetic vibratory apparatus is connected to the basket. Advantageously, the portion of the screening surface is inclined at an angle of 2 to 10 degrees and preferably, 5 to 7 degrees.

Advantageously, the at least one screening surface comprises one screen assembly. Alternatively or additionally, the at least one screening surface comprises at least two screen assemblies.

Preferably, the electromagnetic vibratory apparatus is arranged to induce a linear motion in the at least one screening surface. Linear motion may be regarded as an ellipse with a very long axis to move the screening surface in a first direction and back in an opposing direction. Advantageously, the linear motion is arranged at an angle of between 20 and 60 degrees from horizontal in the direction of the inclined screening surface, preferably between 35 and 50 degrees and most preferably at an angle of 45 degrees.

Advantageously, the electromagnetic vibratory apparatus comprises an electromagnet element in fixed relation to the base and an electromagnet element in fixed relation to the at least one screening surface, electricity passable through at least one of the elements to repel or attract the electromagnet elements. Preferably, electricity is passable through both the electromagnet elements to repel and attract the electromagnet elements. Advantageously, the electricity is an alternating current supply. Preferably, the electromagnet element comprises a metal plate spaced-apart from said electromagnet element. Advantageously, the electromagnet element in fixed relation to the at least one screening element is fixed to the basket.

Preferably, at least a portion of the at least one screening surface is horizontal. Advantageously, the shale shaker comprises upper and lower screening surfaces arranged in the basket, the upper screening surface having a fluid exit end, fluid flowable from the at upper screening surface down onto the at least one lower screen apparatus, and flow diffusion apparatus mounted below the fluid exit end of the upper screening surface and above the lower screening surface, so that fluid flowing down from the upper screening surface flows onto the flow diffusion apparatus and is diffused thereby.

Preferably, the shale shaker further comprises angle adjustment apparatus connected to the basket for adjusting angle of the basket. Advantageously, the shale shaker further comprises flow sensor apparatus connected to the vibratory separator for sensing the flow of material onto the screen apparatus, the flow sensor apparatus controlled by and in communication with the control apparatus, and the control apparatus for adjusting shaker operation in response to signals from the flow sensor apparatus.

Advantageously, the electromagnetic vibratory apparatus is connectible to the basket at a plurality of locations so that a motion profile of the basket is selectively variable between linear, elliptical, balanced elliptical and circular motion. Preferably, the motion profile of the basket includes a first shape at a material introduction end of the basket and a second shape at a material exit end of the basket. Advantageously, the basket has a middle area between a feed end and the discharge end and the motion profile of the basket includes a thin ellipse shape at the material introduction end, a medium ellipse shape at the middle area, and a fatter ellipse shape at the material exit end.

Preferably, the at least one screening surface has an energizable identification apparatus, reader apparatus for reading the energizable identification apparatus and for sending a signal based on said reading to the control apparatus, and the control apparatus for automatically shutting down the vibratory separator upon receipt and processing of the signal based on the identity of the screen apparatus. Advantageously, the shale shaker or basket thereof further comprises energizable identification apparatus on the electromagnetic vibratory apparatus for identifying the vibratory apparatus. The shale shaker may further comprise or form a kit which is supplied with a reader apparatus for reading the energizable identification apparatus and for sending a signal based on said reading to the control apparatus.

Preferably, the basket is made of composite material and the base is made of steel.

The present invention also provides a method for treating material in accordance with claim 41.

Preferably, the basket comprises springs, the basket movably arranged thereon, the control apparatus controlling the frequency of the driving apparatus to maintain vibration of the basket at the natural resonant frequency of the basket.

Advantageously, the basket comprises material to be treated, the method further comprising the step of controlling the frequency of the driving apparatus to maintain vibration of the basket as materials flows therein and through the at least one screening surface in the basket at the natural resonant frequency of the basket when in use.

Preferably, the basket comprises resonators, the basket movably arranged thereon, the control apparatus controlling the frequency of the driving apparatus to maintain vibration of the basket at the natural resonant frequency of the basket when in use.

Preferably, the vibratory separator includes angle adjustment apparatus connected to the basket, the method further comprising the step of adjusting the angle of the basket with the angle adjustment apparatus. Advantageously, the driving apparatus comprisises variable frequency drive apparatus for selectively driving the electromagnetic vibratory apparatus at a selected frequency, sensor apparatus connected to the vibratory separator for sensing a parameter indicative of operation of the vibratory separator for providing a signal corresponding to said parameter, and the control apparatus for receiving signals from the sensor apparatus, for controlling the vibratory separator based on said signals, the method further comprising the step of controlling the variable frequency drive apparatus with the control apparatus. Preferably, the control apparatus is for automatically signalling the variable frequency drive apparatus to change the frequency of the electromagnetic vibratory apparatus so that force applied to the basket is changed.

Advantageously, the basket with material therein has a natural resonant frequency and the control apparatus maintains said natural resonant frequency as material flows through the basket. As the basket fills and empties, the natural resonance of the sprung part of the vibratory separator will change. A feedback system feeding into the control apparatus varies the speed of the electromagnetic vibratory apparatus to match the resonant frequency of the sprung part of the vibratory separator.

Preferably, the control apparatus controls the driving apparatus to de-plug the screen apparatus. Advantageously, based on the natural resonant frequency, determining a measure of solids discharged from the vibratory separator.

Advantageously, the vibratory separator is a shale shaker and the material is drilling fluid with solids therein.

For a better understanding of the present invention, reference will now be made, by way of example, to the accompanying drawings, in which:
Figure 1A is a perspective view of a shale shaker in accordance with the present invention;
Figure 1B is an end view of the shaker of Figure 1A;
Figure 1C is a side view of the shaker of Figure 1A;
Figure 1D is a top view of the shaker of Figure 1A;
Figure 1E is a side view of part of the shaker of Figure 1A;
Figure 2A is a side view in cross-section of a shaker in accordance with the present invention;
Figure 2B is a side view in cross-section of a shaker in accordance with the present invention; and
Figure 2C is a side view in cross-section of a shaker in accordance with the present invention.

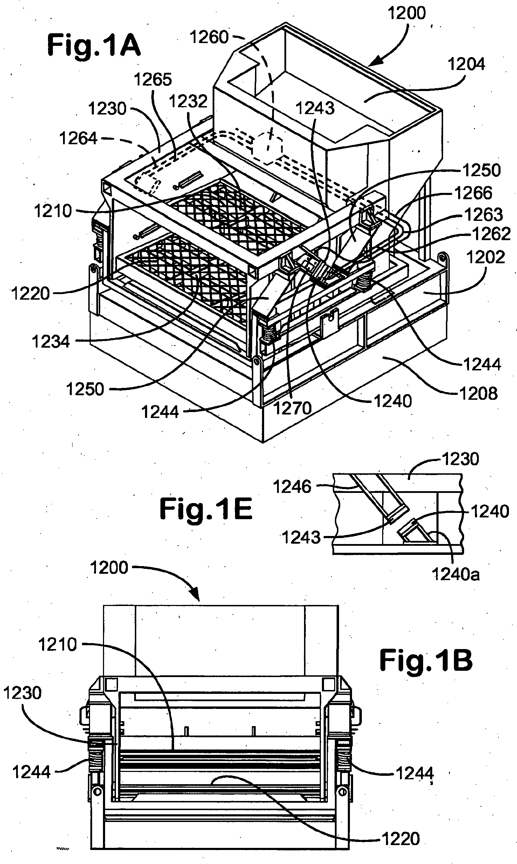

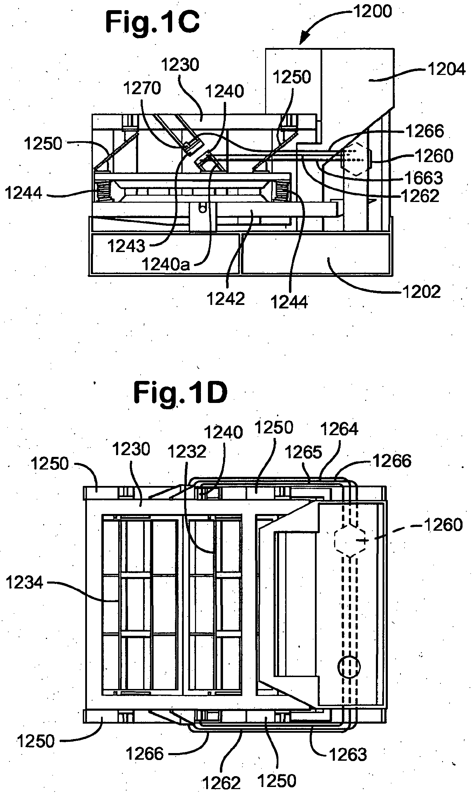

Figures 1A to 1E show a shale shaker 1200 in accordance with the present invention which has a base 1202 with a fluid input tank 1204 from which drilling fluid with solids therein is fed to a screen assembly 1210. Drilling fluid passing through the screen assembly 1210 flows down and material (including undesirable solids such as drilled cuttings) moving up the screen assembly 1210 (which is inclined "uphill") moves off the end of the screen assembly 1210 and flows down onto a lower screen assembly 1220 which is also inclined "uphill." Drilling fluid passing through the screen assembly 1220 flows to a pit, tank or collection receptacle 1208 and material (including undesirable solids such as drilled cuttings) moves off the end of the screen assembly 1220 and falls to a container or further processing apparatus.

The screen assemblies 1210 and 1220 are releasably mounted to decks 1232, 1234 of a basket 1230. Two electromagnet apparatuses 1240 are mounted on a support 1242 which is, optionally, secured to the base 1202 with springs 1244. Plates 1243 secured to a mounting bracket 1246 (which, in one aspect, is made of composite material) which is secured to the basket 1230 are attracted by the electromagnetic apparatuses 1240. Each electromagnetic apparatus 1240 has a mounting bracket 1240a (which, in one aspect, is made of composite material) By pulsing power to the electromagnetic apparatuses 1240 (e.g. with alternating current), the plates are moved quickly toward and away from the electromagnetic apparatuses 1240, thus vibrating the basket 1230 and the screen assemblies 1210 and 1220.

An alternating current applied to the electromagnet causes an attractive electromagnetic force between the electromagnet and the plate. The frequency of input current to the electromagnet is same as the output vibration frequency of the basket. The vibration amplitude of the basket is a function of the input current and frequency to the electromagnet, weight of the basket and processed material, and the stiffness of the springs or resonators supporting the basket. Generally, as the input current to the electromagnet is increased, the vibration amplitude increases. As the input current to the electromagnet is decreased, the vibration amplitude decreases. In one aspect, the apparatuses 1240 vibrate the basket 1230 at its natural resonant frequency.

Leaf springs or resonators 1250 are interconnected between the basket 1230 and the support 1242 to allow the basket 1230 limited freedom of movement with respect to the electromagnetic apparatuses 1240.

A controller 1260 (shown schematically, which may be any suitable known programmable logic controller ("PLC"), variable frequency drive ("VFD") (one for each apparatus 1240), or controller for controlling electromagnetic apparatuses and/or any controller or control system disclosed herein with suitable apparatus, devices, and programming for controlling the electromagnetic apparatuses) via lines 1262 - 1265 (shown schematically) controls the electromagnetic apparatuses 1240. In certain aspects the controller 1260 controls the frequency and amplitude of vibrations of the basket 1230 by controlling the electromagnetic apparatuses 1240. One or more accelerometers 1270 measure acceleration of the basket 1230 and provides signals via a cable 1266 (e.g. a multi-wire cable) to the controller 1260. In one aspect, the accelerometer measures acceleration and sends an output signal to a control system or PLC. The control system or PLC includes parameters to control the electromagnets. An acceleration setpoint is chosen and programmed into the PLC. If the accelerometer measures an acceleration below the setpoint, then the control system or PLC increases the input current to the electromagnets. If the accelerometer measures an acceleration above the setpoint, then the control system or PLC decreases the input current to the electromagnets. If the accelerometer measures an acceleration at the setpoint, then the control system or PLC maintains the previous input current to the electromagnets. Thus, the shaker can operate at constant acceleration under load (and under changing load) because of this closed-loop acceleration control, and, in one aspect, at a constant natural resonant frequency under load.

The system, in certain aspects, operates at the natural frequency of the basket with load springs or resonators. Operating the shaker at the system resonance greatly reduces the input energy required to drive the system. Certain traditional shakers can operate at many times the natural frequency and require excessive power to operate. Operating a shaker in accordance with the present invention at its natural frequency reduces energy requirements and permits the use of lighter baskets.

Certain traditional shakers operate at a fixed motor speed and with a fixed rotating mass. This produces a fixed force at a fixed frequency. A basket without the additional mass of drilling mud operates at a nominal acceleration. As drilling mud is added to the basket, the system mass is increased, but the driving force remains fixed. This results in a significantly decreased acceleration. Acceleration is a primary factor determining shaker performance and fluid handling capacity. In order for a traditional shaker to be able to operate over a wide range of loads, some baskets have been designed to be exceptionally heavy compared to the load they process. This helps reduce the effect of decreasing acceleration with increasing load. However, heavy baskets operating above the system natural frequency require significant input power. Even with heavy baskets, some traditional shakers can lose up to 25% of their nominal acceleration with the addition of weighted drilling mud.

A shaker in accordance with the present invention, in certain aspects, changes the input frequency to the electromagnets to match the natural frequency of the system. Thus, as more mass is added to the system with drilling mud, the PLC automatically determines the new lower natural frequency. In addition, in some aspects, the feedback from the accelerometer is used by the PLC to change the current to the electromagnet and maintain a constant acceleration amplitude. The electromagnets of the shaker can be driven with a typical input current function and a superimposed high-frequency signal to partially de-plug the screens. This can also be accomplished by out-of-phase driving with the typical input current functions. Since adding weight to the screens changes the system natural frequency, this frequency can be measured to assist in determining the weight of the cuttings discharged by the shaker. A signal representative of the natural frequency of the system is sent to the PLC and/or computer that calculates the total amount of solids discharged. In one aspect, since the shaker is automatically tuned to the natural frequency, the mass (solids, liquid, plus any other material) can be indicated. The system natural frequency is calculated by taking the square root of (mass divided by stiffness) where the mass is the total vibrating mass (screen or screens plus basket plus screen hardware plus solids plus liquid) and the stiffness is the equivalent spring rate of the resonators (e.g. four if four are used) in the vibration direction. Since the stiffness of the system does not change, any change in the natural frequency when flow is introduced and when flow progress is due to the addition of mass on a screen. When this is calculated for a last or exit screen (at a discharge end of a shaker), it is assumed that most of the mass on the screen is discharged and can be taken as an indication of solids discharged.

In one embodiment, the controller (PLC or computer) includes two control loops. One control loop controls the acceleration by varying the voltage supplied to the magnets and measuring the signal from the accelerometer, indicative of the acceleration. The other control loop controls the frequency to maintain the lowest ratio of input power to output acceleration. To find the natural frequency.of the system, the controller sweeps the magnet frequency over a given range that the natural frequency is expected to lie within. The frequency that yields the greatest acceleration for the same input is the natural frequency. The frequency control loop tried to maintain the frequency at the natural frequency. Once the natural frequency is found, if the ratio of input power to output acceleration decreases, then the controller adjusts down the frequency until the frequency is found that minimizes the required input power to maintain the same acceleration.

It is within the scope of the present invention to provide a vibratory separator or shale shaker with one, two, or more electromagnetic vibrators, the vibratory separator or shaker having one, two or more generally horizontal screens and/or one, two, three or more screens inclined uphill.

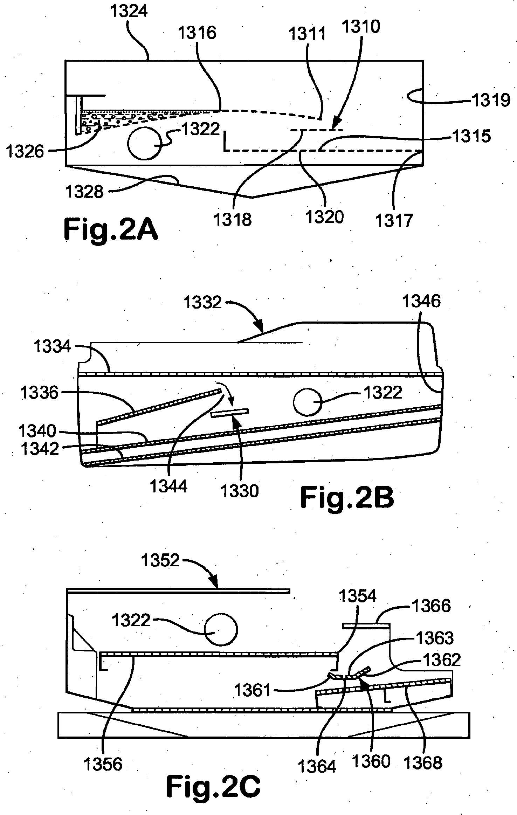

Figure 2A shows schematically a shale shaker in accordance with the present invention with a flow diffusion apparatus 1310. The flow diffusion apparatus in Figure 2A and those in Figure 2B and Figure 2C may be any flow diffusion apparatus disclosed in U.S. Patent 6,868,9,72. Fluid flowing from an exit end 1311 of an upper screen 1316 hits the flow diffusion apparatus 1310. Without the flow diffusion apparatus 1310 in place, the fluid flowing from above would impact an area 1315 on a lower screen 1320. A basket 1324 supports the screens. The flow diffusion apparatus 1310 (as may be the case for any such apparatus) is secured to the basket 1324. The flow diffusion apparatus 1310 may be connected to the upper screen, the lower screen, or both in addition to, or instead of, securement to the basket 1324. The flow diffusion apparatus 1310 has one or a series of holes 1318 therethrough which permit fluid to flow therethrough down onto the lower screen 1320.

A vibratory apparatus 1322 (shown schematically; any electromagnetic vibratory apparatus, disclosed herein) vibrates the basket 1324 in which the upper screen 1316 and lower screen 1320 are mounted. Fluid to be treated is introduced into a pool end 1326 of the shale shaker. Fluid flows from both screens down into a collection receptacle 1328. Separated material exits from an exit end 1317 of the lower screen 1320.

Figure 2B shows a shale shaker 1332 in accordance with the present invention with a flow diffusion apparatus 1330. Fluid introduced at a fluid introduction end 1334 of the shale shaker 1332 flows to an upper screen 1336. The major portion of this fluid flows from the upper screen 1336 to an intermediate screen 1340 and through the intermediate screen 1340 to a lower screen 1342. Fluid flowing from an end 1344 of the intermediate screen 1340 (see arrow, Figure 2B above the apparatus 1330) flows down onto the flow diffusion apparatus 1330 which, in the embodiment shown, is a solid plate; but which, in accordance with the present invention, may have one or more holes, etc. for fluid flow therethrough. Vibrator apparatus 1322 (like that described above; shown schematically) vibrates a screen mounting basket 1346 in which the screens are located.

Figure 2C shows a shale shaker 1352 in accordance with the present invention which has a flow diffusion apparatus 1360 (like those described above) which is positioned below a fluid exit end 1354 of an upper screen 1356 (which, as may be any screen etc. of any embodiment herein, may be any suitable known screen(s), screen apparatus(es), or screen assembly or assemblies). Viewed on end the flow diffusion apparatus in one aspect has two sides 1361, 1362 spaced apart by a flat part 1363 in a truncated "V" shape, but it is within the scope of this invention for any flow diffusion apparatus herein to be "V" shaped, "U" shaped, truncated "V" or "U" shaped, or flat. In one aspect side 1361 and/or side 1362 is deleted.

Fluid flowing from the fluid exit end 1354 of the upper screen 1356 falls into the flow diffusion apparatus 1360 and moves from there down onto a lower screen 1368 (which, as may be any screen etc. of any embodiment herein, may be any suitable known screen(s), screen apparatus(es), or screen assembly or assemblies). In one aspect, fluid flow holes 1364 (of different diameters) are present in the flat part 1363 of the flow diffusion apparatus 1360. In one aspect, all of the holes are of the same diameter. In one aspect the flow diffusion apparatus 1360 extends under and corresponds in length to slightly less than the width of the upper screen 1356 above the flow diffusion apparatus 1360. Vibrator apparatus 1322 (shown schematically; like the apparatus 1322 described above) vibrates a screen mounting basket 1366 in which are secured the screens 1356 and 1368.

A piezoelectric apparatus may be substituted for any electromagnetic vibratory apparatus disclosed herein in any embodiment of the present invention, including, but not limited to, piezoelectric transducers and patches as disclosed in U.S. Patents 6,543,620; 6,938,778; and 6,953,122; and in the references referred to in these patents.

A particular use for a shale shaker incorporating a drive arrangement of the present invention, is with a shale shaker of the type disclosed in PCT Publication No. WO 2005/105327, disclosing a shale shaker having a mechanism for automatically adjusting the incline of a screen to maintain a pool of solids laden drilling fluid at a desired depth.

## Claims

1. A shale shaker for separating solids from a solids laden fluid, the shale shaker comprising a base (1202), a basket (1230) movably mounted on the base (1202), the basket (1230) having at least one screening surface therein, the at least one screening surface having a feed end and a discharge end, at least a portion of the at least one screening surface inclined from the feed end to the discharge end, wherein the shale shaker has an electromagnetic vibratory apparatus for vibrating the basket and the at least one screening surface, and a driving apparatus for driving the electromagnetic vibratory apparatus (1240) **characterized in that** the shale shaker comprises a sensor apparatus and control apparatus (1260) configured to use information obtained from the sensor apparatus for controlling the frequency of the driving apparatus to maintain vibration of the basket (1230) at a natural resonant frequency of the basket (1230) when in use.

2. A shale shaker as claimed in Claim 1, the basket (1230) comprising springs (1244,1250), the basket (1230) movably arranged on the springs (1244,1250), the control apparatus (1260) for controlling the frequency of the driving apparatus to maintain vibration of the basket (1230) at the natural resonant frequency when in use.

3. A shale shaker as claimed in Claim 2, wherein the sparings (1244) comprise a coiled spring.

4. A shale shaker as claimed in Claim 2, wherein the springs (1250) comprise a leaf spring.

5. A shale shaker as claimed in Claim 2, wherein the springs (1244,1250) comprise at least one coiled spring (1244) and at least one leaf spring (1250).

6. A shale shaker as claimed in Claim 1, the basket (1230) comprising resonators (1250), the basket (1230) movably arranged on the resonators (1250), the control apparatus (1260) for controlling the frequency of the driving apparatus to maintain vibration of the basket (1230) at the natural resonant frequency when in use.

7. A shale shaker as claimed in any preceding claim, wherein the driving apparatus comprises variable frequency drive apparatus for selectively driving the electromagnetic vibratory apparatus (1240).

8. A shale shaker as claimed in any preceding claim, wherein control apparatus (1260) is for automatically signalling the driving apparatus to change the frequency of the electromagnetic vibratory apparatus (1240) so that force applied to the basket (1230) is changed.

9. A shale shaker as claimed in any of preceding claim, wherein the control apparatus (1260) is configured to control the driving apparatus to drive the electromagnetic vibratory apparatus (1240) to de-plug the at least one screening surface.

10. A shale shaker as claimed in any preceding claim, wherein the control apparatus (1260) includes interface apparatus for an interface between on-site personnel at a location of the shale shaker and an entity remote therefrom.

11. A shale shaker as claimed in any preceding claim, wherein sensor apparatus (1270) is connected to the shale shaker for sensing a parameter indicative of operation of the shale shaker for providing a signal corresponding to said parameter, and the control apparatus (1260) for receiving signals from the sensor apparatus (1270), for controlling the shale shaker based on said signals.

12. A shale shaker as claimed in Claim 11, wherein the control apparatus (1260) is for monitoring and analyzing a plurality of signals from the sensor apparatus (1270) and for transmitting signals indicative of information related to operation of the vibratory separator to a processor, the processor including a set of health check rules for health checks comprising logical rules, inputs and outputs for defining events associated with the status of the vibratory separator, the processor for determining a severity code for each event and for reporting the events and severity codes to a central server, the events reported by the processor to the central server in a protocol defining a data structure, the data structure comprising a hierarchical tree node structure wherein results from application of the health check rules are a bottommost node of the tree node structure, and displaying the event severity codes on a display.

13. A shale shaker as claimed in Claim 12, wherein the processor is for providing to the central server the results as records containing node information regarding an appropriate location for the results in the tree node structure.

14. A shale shaker as claimed in any preceding claim, wherein the control apparatus (1260) is configured to provide an indication of a potential failure of the shale shaker.

15. A shale shaker as claimed in any preceding claim, wherein the electromagnetic vibratory apparatus (1240) is connected to the basket (1230).

16. A shale shaker as claimed in any preceding claim wherein the portion of the screening surface is inclined at an angle of 2 to 10 degrees.

17. A shale shaker as claimed in any preceding claim wherein the portion of the screening surface is inclined at an angle of 5 to 7 degrees

18. A shale shaker as claimed in any preceding claim, wherein the at least one screening surface comprises one screen assembly (12, 10).

19. A shale shaker as claimed in any preceding claim, wherein the at least one screening surface comprises at least two screen assemblies (1210, 1220).

20. A shale shaker as claimed in any preceding claim, wherein the electromagnetic vibratory apparatus (1240) is arranged to induce a linear motion in the at least one screening surface.

21. A shale shaker as claimed in Claim 20, wherein the linear motion is arranged at an angle of between 20 and 60 degrees from horizontal in the direction of the inclined screening surface.

22. A shale shaker as claimed in Claim 20, wherein the linear motion is arranged at an angle of between 35 and 50 degrees from horizontal in the direction of the inclined screening surface.

23. A shale shaker as claimed in Claim 20, wherein the linear motion is arranged at an angle of 45 degrees from horizontal in the direction of the inclined screening surface.

24. A shale shaker as claimed in any preceding claim, wherein the electromagnetic vibratory apparatus comprises an electromagnet element (1240) in fixed relation to the base (1202) and an electromagnet element (1243) in fixed relation to the at least one screening surface, electricity passable through at least one of the elements to repel or attract the electromagnet elements.

25. A shale shaker as claimed in Claim 24, wherein electricity is passable through both the electromagnet elements (1240,1243) to repel and attract the electromagnet elements (1240,143).

26. A shale shaker as claimed in Claim 24 or 25, wherein the electricity is an alternating current supply.

27. A shale shaker as claimed in Claim 24, 25 or 26, wherein said electromagnet element comprises a metal plate spaced-apart from said electromagnet element.

28. A shale shaker as claimed in any of Claims 24 to 27, wherein said electromagnet element in fixed relation to the at least one screening surface is fixed to the basket (1230).

29. A shale shaker as claimed in any preceding claim, wherein at least a portion of the at least one screening surface is horizontal.

30. A shale shaker as claimed in any preceding claim, comprising upper and lower screening surfaces (1356, 1368) arranged in the basket (1230), the upper screening surface having a fluid exit end, fluid flowable from the at upper screening surface down onto the at least one lower screening surface, and flow diffusion apparatus (1360) mounted below the fluid exit end of the upper screening surface and above the lower screening surface, so that fluid flowing down from the upper screening surface flows onto the flow diffusion apparatus (1360) and is diffused thereby.

31. A shale shaker as claimed in any preceding claim, comprising a piezoelectric transducer to facilitate vibration of the at least one screening surface.

32. A shale shaker as claimed in Claim 31, wherein said piezoelectric transducer is arranged directly on the at least one screening surface.

33. A shale shaker as claimed in any preceding claim, further comprising angle adjustment apparatus connected to the basket (1230) for adjusting angle of the basket (1230).

34. A shale shaker as claimed in any preceding claim, wherein the electromagnetic vibratory apparatus (1240) is connectible to the basket (1230) at a plurality of locations so that a motion profile of the basket (1230) is selectively variable between linear, elliptical, balanced elliptical and circular motion.

35. A shale shaker as claimed in Claim 34, wherein the motion profile of the basket (1230) includes a first shape at a material introduction end of the basket (1230) and a second shape at a material exit end of the basket (1230).

36. A shale shaker as claimed in any preceding claim, wherein the basket (1230) has a middle area between the feed end and the discharge end and the motion profile of the basket (1230) includes a thin ellipse shape at the material introduction end, a medium ellipse shape at the middle area, and a fatter ellipse shape at the material exit end.

37. A shale shaker as claimed in any preceding claim, wherein at least one screening surface has an energizable identification apparatus, reader apparatus for reading the energizable identification apparatus and for sending a signal based on said reading to the control apparatus, and the control apparatus (1260) for automatically shutting down the vibratory separator upon receipt and processing of the signal based on the identity of the screening surface.

38. A shale shaker as claimed in any preceding claim, further comprising energizable identification apparatus on the electromagnetic vibratory apparatus (1240) for identifying the vibratory apparatus.

39. A shale shaker as claimed in any preceding claim, further comprising reader apparatus for reading energizable identification apparatus and for sending a signal based on said reading to the control apparatus.

40. A shale shaker as claimed in any preceding claim, wherein the basket (1230) is made of composite material and the base (1202) is made of steel.

41. A method for treating material introduced to a vibratory separator, the method comprising the steps of feeding material to a vibratory separator, the vibratory separator comprising a base (1202), a basket (1230) movably mounted on the base (1202), at least one screening surface in the basket (1230), the at least one screening surface having a feed end and a discharge end, at least a portion of the at least one screening surface inclined from the feed end to the discharge end, the material flowing on to the at least one screening surface, electromagnetic vibratory apparatus (1240) connected to the basket (1230) vibrating the basket (1230) and the screening surface, driving apparatus for driving the electromagnetic vibratory apparatus, **characterised in that** control apparatus (1260), using information obtained from a sensor apparatus, controls the frequency of the driving apparatus to maintain vibration of the basket (1230) at a natural resonant frequency of the basket (1230) when in use.

42. A method in accordance with Claim 41, wherein the basket (1230) comprises springs (1244), the basket (1230) movably arranged thereon, the control apparatus (1260) controlling the frequency of the driving apparatus to maintain vibration of the basket (1230) at the natural resonant frequency of the basket (1230).

43. A method in accordance with Claim 41 or 42, wherein the basket (1230) comprises material to be treated, the method further comprising the step of controlling the frequency of the driving apparatus to maintain vibration of the basket (1230) as materials flows therein and through the at least one screening surface in the basket (1230) at the natural resonant frequency of the basket (1230) when in use.

44. A method in accordance with Claim 41, wherein the basket (1230) comprises resonators (1250), the basket (1230) movably arranged thereon, the control apparatus (1260) controlling the frequency of the driving apparatus to maintain vibration of the basket (1230) at the natural resonant frequency of the basket (1230) when in use.

45. A method in accordance with any one of Claims 41 to 44, wherein the vibratory separator includes angle adjustment apparatus connected to the basket (1230), the method further comprising the step of adjusting the angle of the basket (1230) with the angle adjustment apparatus.

46. A method in accordance with any one of Claims 41 to 45, wherein the driving apparatus comprises variable frequency drive apparatus for selectively driving the electromagnetic vibratory apparatus (1240), sensor apparatus (1270) connected to the vibratory separator for sensing a parameter indicative of operation of the vibratory separator for providing a signal corresponding to said parameter, and the control apparatus (1260) for receiving signals from the sensor apparatus (1270), for controlling the vibratory separator based on said signals, the method further comprising the step of controlling the variable frequency drive apparatus with the control apparatus.

47. A method in accordance with Claim 46, wherein the control apparatus (1260) is for automatically signalling the variable frequency drive apparatus to change the frequency of the electromagnetic vibratory apparatus (1240) so that force applied to the basket (1230) is changed.

48. A method in accordance with Claim 47, wherein the basket (1230) contains solids laden fluid, the control apparatus (1260) continuously changing the frequency to continuously maintain the basket (1230) vibrating at the natural resonant frequency of the basket (1230) and the solids laden fluid.

49. A method in accordance with any of Claims 41 to 48, wherein the control apparatus (1260) controls the driving apparatus to de-plug the screening surface.

50. A method in accordance with any of Claims 41 to 49, wherein based on said natural resonant frequency, determining a measure of solids discharged from the vibratory separator.

51. A method in accordance with any of Claims 41 to 50, wherein the vibratory separator is a shale shaker and the material is drilling fluid with solids therein.

52. A method in accordance with any of Claims 41 to 50, the vibratory separator further comprising a flow sensor apparatus for sensing the flow of material onto the at least one screening surface, the flow sensor apparatus controlled by and in communication with the control apparatus (1260), and the control apparatus (1260) for adjusting shaker operation in response to signals from the flow sensor apparatus.

53. A method in accordance with any of Claims 41 to 52, the vibratory separator further comprising a flow sensor apparatus for sensing the flow of material onto the at least one screening surface wherein the control apparatus (1260) can automatically shut down the vibratory separator based on a parameter of the material or based on the flow rate of the material.

## Patentansprüche

1. Schieferschüttler zum Trennen von Feststoffen aus einem feststoffbeladenen Fluid, wobei der Schieferschüttler eine Basis (1202), einen Korb (1230), der beweglich auf der Basis (1202) angebracht ist, wobei in dem Korb (1230) mindestens eine Sieboberfläche umfasst ist, wobei die mindestens eine Sieboberfläche ein Zufuhrende und ein Austrittsende aufweist und mindestens ein Teil von der mindestens einen Sieboberfläche von dem Zufuhrende hin zu dem Austrittsende geneigt ist, wobei der Schieferschütter einen elektromagentischen Vibrationsapparat zum Vibrieren des Korbs und der mindestens einen Sieboberfläche aufweist, und einen Antriebsapparat zum Antreiben des elektromagnetischen Vibrationsapparats (1240) umfasst, wobei der Schieferschüttler **dadurch gekennzeichnet ist, dass** er einen Sensorapparat und einen Steuerapparat (1260) zum Steuern der Frequenz von dem Antriebsapparat umfasst, wobei der Steuerapparat (1260) so gestaltet ist, dass er Information, die von dem Sensorapparat erhalten wird, verwendet, und zwar um während des Betriebs die Vibration des Korbs (1230) bei der Eigenresonanzfrequenz des Korbs (1230) zu halten.

2. Schieferschüttler nach Anspruch 1, wobei der Korb (1230) Federn (1244, 1250) umfasst, wobei der Korb (1230) beweglich auf den Federn (1244, 1250) angeordnet ist, und der Steuerapparat (1260) die Frequenz von dem Antriebsapparat steuert, um während des Betriebs die Vibration des Korbs (1230) bei der Eigenresonanzfrequenz zu hatten.

3. Schieferschüttler nach Anspruch 2, wobei die Federn (1244) eine gewickelte Feder umfassen.

4. Schieferschüttler nach Anspruch 2, wobei die Federn (1250) eine Blattfeder umfassend.

5. Schieferschüttler nach Anspruch 2, wobei die Federn (1244, 1250) mindestens eine gewickelte Feder (1244) und mindestens eine Blattfeder (1250) umfassen.

6. Schieferschüttler nach Anspruch 1, wobei der Korb (1230) Resonatoren (1250) umfasst, wobei der Korb (1230) beweglich auf den Resonatoren (1250) angeordnet ist, und der Steuerapparat (1260) die Frequenz von dem Antriebsapparat steuert, um die Vibration des Korbs (1230) bei der Eigenresonanzfrequenz des Korbs (1230) zu halten.

7. Schieferschüttler nach einem der vorhergehenden Ansprüche, wobei der Antriebsapparat einen Antriebsapparat mit variabler Frequenz umfasst, um selektiv den elektromagnetischen Vibrationsapparat (1240) anzutreiben.

8. Schieferschüttler nach einem der vorhergehenden Ansprüche, wobei der Steuerapparat (1260) dazu dient, dem Antriebsapparat automatisch zu signalisieren die Frequenz des elektromagnetischen Vibrationsapparats (1240) zu verändern, sodass die Kraft, die an dem Korb (1230) angelegt ist, verändert wird.

9. Schieferschüttler nach einem der vorhergehenden Ansprüche, wobei der Steuerapparat (1260) gestaltet ist, um den Antriebsapparat zu steuern, um den elektromagnetischen Vibrationsapparat (1240) anzutreiben, um die mindestens eine Sieboberfläche abzustecken (Engl.: de-plug).

10. Schieferschüttler nach einem der vorhergehenden Ansprüche, wobei der Steuerapparat (1260) einen Schnittstellenapparat für eine Schnittstelle zwischen Vor-Ort-Personal an einem Ort des Schieferschüttlers und einer davon entfernten Einheit umfasst.

11. Schieferschüttler nach einem der vorhergehenden Ansprüche, wobei der Sensorapparat (1270) mit dem Schieferschüttler verbunden ist, damit er einen Paramater wahrnimmt, der für den Betrieb des Schieferschüttlers bezeichnend ist, um ein Signal bereitzustellen, das diesem Parameter entspricht, und der Steuerapparat (1260) zum Empfangen der Signale von dem Sensorapparat (1270) den Schieferschüttler auf Basis der Signale steuert.

12. Schieferschüttler nach Anspruch 11, wobei der Steuerapparat (1260) dazu dient, eine Vielzahl von Signalen von dem Sensorapparat (1270) zu überwachen und zu analysieren und um die Signale, die für Information bezeichnend sind, welche mit dem Betrieb der Vibrationstrennvorrichtung in Beziehung steht, zu einem Prozessor zu übertragen, wobei der Prozessor einen Satz von Gesundheitskontrollregeln für Gesundheitskontrollen umfasst, welche Logikregeln, Inputs und Outputs zum Definieren von Ereignissen, die mit dem Status der Vibrationstrennvorrichtung verbunden sind, umfassen, wobei der Prozessor dazu dient, einen Schweregrad für jedes Ereignis zu bestimmen und die Ereignisse und Schweregrade an einen zentralen Server zu berichten, wobei die Ereignisse, die von dem Prozessor an den zentralen Server in einem Protokoll, das eine Datenstruktur definiert, berichtet werden, wobei die Datenstruktur eine hierarchische Baum-Kotenstruktur ist, wobei Ergebnisse aus der Anwendungen der Gesundheitskontrollregeln einen untersten Koten in der Baum-Knotenstruktur darstellen, und die Ereignisschweregrade werden auf einer Anzeige angezeigt.

13. Schieferschüttler nach Anspruch 12, wobei der Prozessor dazu dient, um dem zentralen Server die Ergebnisse als Aufzeichnungen bereitzustellen, die die Knoteninformation bezüglich eines dazugehörigen Orts für die Ergebnisse in der Baum-Knotenstruktur enthalten.

14. Schieferschüttler nach einem der vorhergehenden Ansprüche, wobei der Steuerapparat (1260) gestaltet ist, um einen Hinweis für ein mögliches Versagen des Schieferschüttlers bereitzustellen.

15. Schieferschüttler nach einem der vorhergehenden Ansprüche, wobei der elektromagnetische Vibrationsapparat (1240) mit dem Korb (1230) verbunden ist.

16. Schieferschüttler nach einem der vorhergehenden Ansprüche, wobei der Teil der Sieboberfläche mit einem Winkel von 2 bis 10 Grad geneigt ist.

17. Schieferschüttier nach einem der vorhergehenden Ansprüche, wobei der Teil der Sieboberfläche mit einem Winkel von 5 bis 7 Grad geneigt ist.

18. Schieferschüttler nach einem der vorhergehenden Ansprüche, wobei die mindestens eine Sieboberfläche eine Siebanordnung (1210) umfasst.

19. Schieferschüttler nach einem der vorhergehenden Ansprüche, wobei die mindestens eine Sieboberfläche zwei Siebanordnungen (1210, 1220) umfasst.

20. Schieferschüttler nach einem der vorhergehenden Ansprüche, wobei der elektromagnetische Vibrationsapparat (1240) so angeordnet ist, dass er eine lineare Bewegung in der mindestens einen Sieboberfläche hervorruft.

21. Schieferschüttler nach Anspruch 20, wobei die lineare Bewegung in einem Winkel zwischen 20 und 60 Grad von der Horizontalen hin zu der Richtung der geneigten Sieboberfläche angeordnet ist.

22. Schieferschüttler nach Anspruch 20, wobei die lineare Bewegung in einem Winkel zwischen 35 und 50 Grad von der Horizontalen hin zu der Richtung der geneigten Sieboberfläche angeordnet ist.

23. Schieferschüttler nach Anspruch 20, wobei die lineare Bewegung in einem Winkel von 45 Grad von der Horizontalen hin zu der Richtung der geneigten Sieboberfläche angeordnet ist.

24. Schieferschüttler nach einem der vorhergehenden Ansprüche, wobei der elektromagnetische Vibrationsapparat ein elektromagnetisches Element (1240) In einem fixierten Verhältnis zu der Basis (1202) und ein elektromagnetisches Element (1243) in einem fixierten Verhältnis zu der mindestens einen Sieboberfläche umfasst, wobei Elektrizität durch mindestens eines der Elemente passieren kann, um die Elektromagnetelemente abzustoßen oder anzuziehen.

25. Schieferschüttler nach Anspruch 24, wobei die Elektrizität durch beide Elektromagnetelemente (1240, 1243) passieren kann, um die Elektromagnetelemente (1240, 1243) abzustoßen oder anzuziehen.

26. Schieferschüttler nach Anspruch 24 oder 25, wobei die Elektrizität eine Wechselstromversorgung ist.

27. Schieferschüttler nach Anspruch 24, 25 oder 26, wobei das Elektromagnetelement eine Metallplatte umfasst, die von dem Elektromagnetelement in einem Abstand angeordnet ist.

28. Schieferschüttler nach einem der Ansprüche 24 bis 27, wobei das Elektromagnetelement, das in einem fixierten Verhältnis zu der mindestens einen Sieboberfläche vorliegt, an dem Korb (1230) befestigt ist.

29. Schieferschüttler nach einem der vorhergehenden Ansprüche, wobei mindestens ein Teil von der mindestens einen Sieboberfläche horizontal ist.

30. Schieferschüttler nach einem der vorhergehenden Ansprüche, der eine obere und untere Sieboberflächen (1356, 1368), die in dem Korb (1230) angeordnet sind, wobei die obere Sieboberfläche ein Fluidausgangende aufweiset, wobei Fluid von der oberen Sieboberfläche hinunter auf die mindestens eine untere Sieboberfläche strömen kann, und einen Strömungsdiffusionsapparat (1360) umfasst, der unter dem Fluidausgangende von der oberen Sieboberfläche und über der unteren Sieboberfläche angebracht ist, sodass das Fluid von der oberen Sieboberfläche auf den Strömungsdiffusionsapparat (1360) herunterströmt und dadurch diffundiert wird.

31. Schieferschüttler nach einem der vorhergehenden Ansprüche, umfassend einen piezoelektrischen Wandler, um die Vibration von der mindestens einen Sieboberfläche zu fördern.

32. Schieferschüttler nach Anspruch 31, wobei der piezoelektrische Wandler direkt auf der mindestens einen Sieboberfläche angeordnet ist.

33. Schieferschüttler nach einem der vorhergehenden Ansprüche, ferner umfassend einen Winkeleinstellapparat, der mit dem Korb (1230) verbunden ist, um den Winkel des Korbs (1230) einzustellen.

34. Schieferschüttler nach einem der vorhergehenden Ansprüche, wobei der elektromagentische Vibrationsapparat (1240) mit dem Korb (1230) an einer Vielzahl von Stellen verbindbar ist, sodass ein Bewegungsprofil von dem Korb (1230) selektiv zwischen einer linearen, elliptischen, ausgewogen elliptischen und einer kreisförmigen Bewegung variiert werden kann.

35. Schieferschüttler nach Anspruch 34, wobei das Bewegungsprofil des Korbs (1230) eine erste Form an einem Materialeinführungsende von dem Korb (1230) und eine zweite Form an einem Materialausgangsende von dem Korb (1230) umfasst.

36. Schieferschüttler nach einem der vorhergehenden Ansprüche, wobei der Korb (1230) einen Mittelbereich zwischen dem Zufuhrende und dem Austrittsende aufweiset und das Bewegungsprofil des Korbs (1230) eine geringe elliptische Form an dem Materialeinführungsende, eine mittlere elliptische Form an dem Mittelbereich und eine starke elliptische Form an dem Materialausgangsende umfasst.

37. Schieferschüttler nach einem der vorhergehenden Ansprüche, wobei die mindestens eine Sieboberfläche einen strombeaufschlagten (Engl.: energizable) Identifikationsapparat, einen Leseapparat zum Auslesen des strombeaufschlagten Identifikationsapparats und zum Senden eines Signals an den Steuerapparat, wobei das Signal auf dem Auslesen basiert, und den Steuerapparat (1260) zum automatischen Abschalten der Vibrationstrennvorrichtung nach dem Erhalt und der Prozessierung von dem Signal, das auf der Identität von der Sieboberfläche basiert, aufweiset.

38. Schieferschüttler nach einem der vorhergehenden Ansprüche, ferner umfassend einen strombeaufschlagten Identifikationsapparat auf dem elektromagnetischen Vibrationsapparat (1240) zum Identifizieren des Vibrationsapparats.

39. Schieferschüttler nach einem der vorhergehenden Ansprüche, ferner umfassend einen Leseapparat zu Auslesen des strombeaufschlagten Identifikationsapparats und zum Senden eines Signal an den Steuerapparat, wobei das Signal auf dem Auslesen von dem Steuerapparat basiert.

40. Schieferschüttler nach einem der vorhergehenden Ansprüche, wobei der Korb (1230) aus einem Verbundmaterial und die Basis (1202) aus Stahl hergestellt ist.

41. Verfahren zur Behandlung von Material, das in eine Vibrationstrennvorrichtung eingeführt wird, wobei das Verfahren die Schritte des Zuführens von Material zu einer Vibrationstrennvorrichtung umfasst, wobei die Vibrationstrennvorrichtung eine Basis (1202), einen Korb (1230), der beweglich auf der Basis (1202) angebracht ist, wobei in dem Korb (1230) mindestens eine Sieboberfläche umfasst ist, wobei die mindestens eine Sieboberfläche ein Zufuhrende und ein Austrittsende aufweiset und mindestens ein Teil von der mindestens einen Sieboberfläche von dem Zufuhrende hin zu dem Austrittsende geneigt ist, wobei das Material auf die mindestens eine Sieboberfläche strömt, einen elektromagentischen Vibrationsapparat (1240), der mit dem Korb (1230) verbunden ist und der den Korb (1230) und die Sieboberfläche vibriert, und einen Antriebsapparat zum Antreiben des elektromagnetischen Vibrationsapparats umfasst, **dadurch gekennzeichnet, dass** der Steuerapparat (1260) die Frequenz von dem Antriebsapparat steuert, wobei der Steuerapparat (1260) Information, die von einem Sensorapparat erhalten wird, verwender, und zwar um während des Betriebs die Vibration des Korbs (1230) bei der Eigenresonanzfrequenz des Korbs (1230) zu halten.

42. Verfahren nach Anspruch 41, wobei der Korb (1230) Federn (1244) umfasst, wobei der Korb (1230) beweglich auf diesen angeordnet ist, und der Steuerapparat (1260) die Frequenz von dem Antriebsapparat steuert, um die Vibration des Korbs (1230) bei der Eigenresonanzfrequenz des Korbs (1230) zu halten.

43. Verfahren nach Anspruch 41 oder 42, wobei der Korb (1230) Material umfasst, das behandelt werden soll, wobei das Verfahren ferner den Schritt des Steuerns von der Frequenz des Antriebsapparats umfasst, um während des Betriebs die Vibration des Korbs (1230), während Material in diesen hineinströmt und durch die mindestens eine Sieboberfläche in dem Korb (1230) hindurchströmt, bei der Eigenresonanzfrequenz des Korbs (1230) zu halten.

44. Verfahren nach Anspruch 41, wobei der Korb (1230) Resonatoren (1250) umfasst, wobei der Korb (1230) beweglich auf diesen angeordnet ist, und der Steuerapparat (1260) die Frequenz von dem Antriebsapparat steuert, um die Vibration des Korbs (1230) bei der Eigenresonanzfrequenz des Korbs (1230) zu halten.

45. Verfahren nach einem der Ansprüche 41 bis 44, wobei die Vibrationstrennvorrichtung einen Winkeleinstellapparat umfasst, der mit dem Korb (1230) verbunden ist, wobei das Verfahren ferner den Schritt des Einstellens von dem Winkel des Korbs (1230) mit dem Winkeleinstellapparat umfasst.

46. Verfahren nach einem der Ansprüche 41 bis 45, wobei der Antriebsapparat einen Variable-Frequenz-Antriebsapparat, um selektiv den elektromagnetischen Vibrationsapparat (1240) anzutreiben, den Sensorapparat (1270), der mit der Vibrationstrennvorrichtung verbunden ist, damit er einen Paramater wahrnimmt, weicher für den Betrieb der Vibrationstrennvorrichtung bezeichnend ist, um ein Signal bereitzustellen, das diesem Parameter entspricht, und den Steuerapparat (1260) zum Empfangen der Signale von dem Sensorapparat (1270) umfasst, um die Vibrationstrennvorrichtung auf Basis der Signale zu steuern, wobei das Verfahren ferner den Schritt des Steuerns von dem Variable-Frequenz-Antriebsapparat mit dem Steuerapparat umfasst.

47. Verfahren nach Anspruch 46, wobei der Steuerapparat (1260) dazu dient, dem Variable-Frequenz-Antriebsapparat automatisch zu signalisieren, die Frequenz des elektromagnetischen Vibrationsapparats (1240) zu verändern, sodass die Kraft, die an dem Korb (1230) angelegt ist, verändert wird.

48. Verfahren nach Anspruch 47, wobei der Korb (1230) feststoffbeladenes Fluid enthält, wobei der Steuerapparat (1260) durchgehend die Frequenz verändern, um durchgehend den Korb (1230) bei der Eigenresonanzfrequenz des Korbs (1230) und des feststoffbeladenen Fluids zu vibrieren.

49. Verfahren nach einem der Ansprüche 41 bis 48, wobei der Steuerapparat (1260) den Antriebsapparat steuert, um die Sieboberfläche abzustecken (Engl.: de-plug).

50. Verfahren nach einem der Ansprüche 41 bis 49, wobei auf Basis der Eigenresonanzfrequenz ein Feststoffausmaß bestimmt wird, das aus der Vibrationstrennvorrichtung entlassen wir.

51. Verfahren nach einem der Ansprüche 41 bis 50, wobei die Vibrationstrennvorrichtung ein Schieferschüttler und das Material eine Bohrspülung mit darin enthaltenen Feststoffen ist.

52. Verfahren nach einem der Ansprüche 41 bis 50, wobei die Vibrationstrennvorrichtung ferner einen Strömungssensorapparat zum Wahrnehmen der Strömung von dem Material auf der mindestens einen Sieboberfläche, wobei der Strömungssensorapparat durch und in Verbindung mit dem Steuerapparat (1260) gesteuert wird, und den Steuerapparat (1260) zum Einstellen des Schüttlerbetriebs in Antwort auf die Signale von dem Strömungsapparat umfasst.

53. Verfahren nach einem der Ansprüche 41 bis 52, wobei die Vibrationstrennvorrichtung ferner einen Strömungssensorapparat zum Wahrnehmen der Strömung von dem Material auf der mindestens einen Sieboberfläche umfasst, wobei der Steuerapparat (1260) die Vibrationstrennvorrichtung auf Basis von einem Parameter von dem Material oder auf Basis von der Strömungsgeschwindigkeit von dem Material automatisch abschaltet.

## Revendications

1. Tamis vibrant permettant de séparer des matières solides d'un fluide chargé de matériaux solides, le tamis vibrant comportant une base (1202), un panier (1230) monté de façon mobile sur la base (1202), le panier (1230) comportant au moins une surface de criblage, la, au moins une, surface de criblage possédant une extrémité d'alimentation et une extrémité d'évacuation, une partie au moins de la, au moins une, surface de criblage étant inclinée à partir de l'extrémité d'alimentation vers l'extrémité d'évacuation, dans lequel le tamis vibrant comporte un dispositif vibratoire électromagnétique pour faire vibrer le panier et la, au moins une, surface de criblage, et un dispositif d'activation pour commander le dispositif vibratoire électromagnétique (1240), **caractérisé en ce que** le tamis vibrant comporte un dispositif de capteur et un dispositif de commande (1260) configuré pour utiliser une information obtenue à partir du dispositif de capteur en vue de commander la fréquence du dispositif d'activation afin de maintenir la vibration du panier (1230) à une fréquence de résonance naturelle du panier (1230) lorsqu'il est utilisé.

2. Tamis vibrant selon la revendication 1, le panier (1230) comportant des ressorts (1244, 1250), le panier (1230) étant disposé de façon mobile sur les ressorts (1244, 1250), le dispositif de commande (1260) permettant de commander la fréquence du dispositif d'activation afin de maintenir la vibration du panier (1230) à la fréquence de résonance naturelle lorsqu'il est utilisé.

3. Tamis vibrant selon la revendication 2, dans lequel les ressorts (1244) comportent un ressort à boudin.

4. Tamis vibrant selon la revendication 2, dans lequel les ressorts (1250) comportent on ressort à lames.

5. Tamis vibrant selon la revendication 2, dans lequel les ressorts (1244, 1250) comportent au moins un ressort à boudin (1244) et au moins un ressort à lame (1250).

6. Tamis vibrant selon la revendication 1, le panier (1230) comportant des résonateurs (1250), le panier (1230) étant disposé de façon mobile sur les résonateurs (1250), le dispositif de commande (1260) permettant de commander la fréquence du dispositif d'activation en vue de maintenir la vibration du panier (1230) à la fréquence de résonance naturelle lorsqu'il est utilisé.

7. Tamis vibrant selon l'une quelconque des revendications précédentes, dans lequel le dispositif d'activation comporte un dispositif de commande de fréquences variables pour commander, de façon sélective, le dispositif vibratoire électromagnétique (1240).

8. Tamis vibrant selon l'une quelconque des revendications précédentes, dans lequel le dispositif de commande (1260) est conçu pour signaler automatiquement au dispositif d'activation de modifier la fréquence du dispositif électromagnétique vibratoire (1240) de façon que la force appliquée sur le panier (1230) soit modifiée.

9. Tamis vibrant selon l'une quelconque des revendications précédentes, dans lequel le dispositif de commande (1260) est configuré pour commander le dispositif d'activation en vue de commander au dispositif vibratoire électromagnétique de désobstruer la, au moins une, surface de criblage.

10. Tamis vibrant selon l'une quelconque des revendications précédentes, dans lequel le dispositif de commande (1260) comporte un dispositif d'interface pour établir une interface entre le personnel sur le site au niveau d'une position du tamis vibrant et une entité distante de celui-ci.

11. Tamis vibrant selon l'une quelconque des revendications précédentes, dans lequel le dispositif de capteur (1270) est connecté au tamis vibrant afin de détecter un paramètre indicateur du fonctionnement du tamis vibrant en vue de fournir un signal correspondant au dit paramètre, et au dispositif de commande (1260) permettant de recevoir des signaux à partir du dispositif de capteur (1270) afin de commander le tamis vibrant sur la base desdits signaux.

12. Tamis vibrant selon la revendication 11, dans lequel le dispositif de commande (1260) permet de contrôler et d'analyser une pluralité de signaux provenant du dispositif de capteur (1270) et de transmettre à un processeur les signaux indicateurs d'une information se rapportant au fonctionnement du séparateur vibrant, le processeur comportant un ensemble de règles de bilan de bon fonctionnement correspondant à des bilans de bon fonctionnement comportant des règles logiques, des entrées et des sorties pour définir des événements associés à l'état du séparateur vibrant, le processeur pour déterminer un code de sévérité correspondant à chaque événement et pour rapporter les événements et les codes de sévérité à un serveur central, les événements étant rapportés par le processeur au serveur central suivant un protocole définissant une structure de données, la structure de données comportant une structure nodale hiérarchique arborescente dans laquelle les résultats à partir de l'application des règles de bilan de bon fonctionnement sont un noeud le plus inférieur de la structure nodale hiérarchique arborescente, et affichant les codes de sévérité de l'événement sur un dispositif d'affichage.

13. Tamis vibrant selon la revendication 12, dans lequel le processeur est utilisé pour fournir au serveur central les résultats sous forme d'enregistrements contenant une information de noeud se rapportant à une position appropriée concernant les résultats dans la structure nodale arborescente.

14. Tamis vibrant selon l'une quelconque des revendications précédentes, dans lequel le dispositif de commande (1260) est configuré pour fournir une indication d'une défaillance potentielle du tamis vibrant.

15. Tamis vibrant selon l'une quelconque des revendications précédentes, dans lequel le dispositif vibratoire électromagnétique (1240) est connecté au panier (1230).

16. Tamis vibrant selon l'une quelconque des revendications précédentes, dans lequel la partie de la surface de criblage est inclinée suivant un angle de 2 à 10 degrés.

17. Tamis vibrant selon l'une quelconque des revendications précédentes, dans lequel la partie de la surface de criblage est inclinée suivant un angle de 5 à 7 degrés.

18. Tamis vibrant selon l'une quelconque des revendications précédentes, dans lequel la, au moins une, surface de criblage comporte un ensemble de crible (1210).

19. Tamis vibrant selon l'une quelconque des revendications précédentes, dans lequel la, au moins une, surface de criblage comporte au moins deux ensembles de crible (1210, 1220).

20. Tamis vibrant selon l'une quelconque des revendications précédentes, dans lequel le dispositif vibratoire électromagnétique (1240) est conçu de façon à induire un déplacement linéaire dans la, au moins une, surface de criblage.

21. Tamis vibrant selon la revendication 20, dans lequel le déplacement linéaire est conçu suivant un angle compris entre 20 et 60 degrés à partir de l'horizontale dans la direction de la surface de criblage inclinée.

22. Tamis vibrant selon la revendication 20, dans lequel le déplacement linéaire est conçu suivant un angle compris entre 35 et 50 degrés à partir de l'horizontale dans la direction de la surface de criblage inclinée.

23. Tamis vibrant selon la revendication 20, dans lequel le déplacement linéaire est conçu suivant un angle de 45 degrés à partir de l'horizontale dans la direction de la surface de criblage inclinée.

24. Tamis vibrant selon l'une quelconque des revendications précédentes, dans lequel le dispositif vibratoire électromagnétique comporte un élément d'électroaimant (1240) en relation fixe avec la base (1202) et un élément d'électroaimant (1243) en relation fixe avec la, au moins une, surface de criblage, le courant électrique pouvant passer à travers au moins l'un des éléments afin de repousser ou d'attirer les éléments d'électroaimant.

25. Tamis vibrant selon la revendication 24, dans lequel le courant électrique peut passer à travers les deux éléments électroaimants (1240, 1243) pour repousser et attirer les éléments électroaimants (1240, 1243).

26. Tamis vibrant selon la revendication 24 ou 25, dans lequel le courant électrique est fourni par une alimentation en courant alternatif.

27. Tamis vibrant selon la revendication 24, 25 ou 26, dans lequel ledit élément électroaimant comporte une plaque métallique placée à distance dudit élément électroaimant.

28. Tamis vibrant selon l'une quelconque des revendications 24 à 27, dans lequel ledit élément électroaimant en relation fixe avec la, au moins une, surface de criblage, est fixé sur le panier (1230).

29. Tamis vibrant selon l'une quelconque des revendications précédentes, dans lequel une partie au moins de la, au moins une, surface de criblage est horizontale.

30. Tamis vibrant selon l'une quelconque des revendications précédentes, comportant des surfaces de criblage, supérieure et inférieure, (1356, 1368) agencées dans le panier (1230), dans lequel la surface de criblage supérieure présentant une extrémité d'entrée de fluide, le fluide pouvant s'écouler en descendant depuis la surface de criblage supérieure vers la, au moins une, surface de criblage inférieure, et un dispositif de diffusion de l'écoulement (1360) monté au-dessous de l'extrémité de sortie de fluide de la surface de criblage supérieure et au-dessus de la surface de criblage inférieure de façon que le fluide s'écoulant vers le bas depuis la surface de criblage supérieure s'écoule sur le dispositif de diffusion de l'écoulement (1360) et soit diffusé de ce fait.

31. Tamis vibrant selon l'une quelconque des revendications précédentes, comprenant un transducteur piézoélectrique pour faciliter la vibration de la, au moins une, surface de criblage.

32. Tamis vibrant selon la revendication 31, dans lequel ledit transducteur piézoélectrique est disposé directement sur la, au moins une, surface de criblage.

33. Tamis vibrant selon l'une quelconque des revendications précédentes, comportant, de plus, un appareil de réglage d'inclinaison raccordé au panier (1230) en vue de régler l'angle du panier (1230).

34. Tamis vibrant selon l'une quelconque des revendications précédentes, dans lequel le dispositif vibratoire électromagnétique (1240) peut être connecté au panier (1230) au niveau d'une pluralité de positions de façon qu'un profil de déplacement du panier (1230) puisse être modifié de façon sélective entre un déplacement linéaire, elliptique, elliptique équilibré ou circulaire.

35. Tamis vibrant selon la revendication 34, dans lequel le profil de déplacement du panier (1230) comporte une première configuration au niveau d'une extrémité d'introduction de matériau du panier (1230) et une deuxième configuration au niveau d'une extrémité de sortie de matériau du panier (1230).

36. Tamis vibrant selon l'une quelconque des revendications précédentes, dans lequel le panier (1230) présente une zone médiane entre l'extrémité d'alimentation et l'extrémité d'évacuation et le profil du déplacement du panier (1230) comporte une configuration en ellipse mince au niveau de l'extrémité d'introduction de matériau, une configuration en ellipse moyenne au niveau de la zone centrale et une configuration en ellipse plus large au niveau de l'extrémité de sortie du matériau.

37. Tamis vibrant selon l'une quelconque des revendications précédentes, dans lequel au moins une surface de criblage comporte un dispositif d'identification excitable électriquement, un appareil de lecture pour lire le dispositif d'identification excitable électriquement et pour envoyer un signal sur la base de ladite lecture au dispositif de commande, et dans lequel le dispositif de commande (1260) permettant d'éteindre automatiquement le séparateur vibrant lors de la réception et du traitement du signal sur la base de l'identité de la surface de criblage.

38. Tamis vibrant selon l'une quelconque des revendications précédentes, comportant, de plus, le dispositif d'identification excitable électriquement sur le dispositif vibratoire électromagnétique (1240) pour identifier le dispositif vibratoire.

39. Tamis vibrant selon l'une quelconque des revendications précédentes, comportant, de plus, un appareil de lecture pour lire le dispositif d'identification excitable électriquement et pour transmettre un signal sur la base de ladite lecture au dispositif de commande.

40. Tamis vibrant selon l'une quelconque des revendications précédentes, dans lequel le panier (1230) est constitué de matériau composite et la base (1202) est constituée d'acier.

41. Procédé pour traiter un matériau introduit dans un séparateur vibrant, le procédé comportant les étapes comprenant le fait de fournir un matériau à un séparateur vibrant, le séparateur vibrant comprenant une base (1202), un panier (1230) monté de façon mobile sur la base (1202), au moins une surface de criblage dans le panier (1230), la, au moins une, surface de criblage présentant une extrémité d'alimentation et une extrémité d'évacuation, une partie au moins de la, au moins une, surface de criblage étant inclinée à partir de l'extrémité d'alimentation vers l'extrémité d'évacuation, le matériau s'écoulant sur la, au moins une, surface de criblage, le dispositif vibratoire électromagnétique (1240) étant connecté au panier (1230) faisant vibrer le panier (1230) et la surface de criblage, un dispositif d'activation permettant de commander le dispositif vibratoire électromagnétique, **caractérisé en ce que** le dispositif de commande (1260), utilisant une information obtenue à partir d'un dispositif de capteur, commande la fréquence du dispositif d'activation afin de maintenir la vibration du panier (1230) à une fréquence de résonance naturelle du panier (1230) lorsqu'il est utilisé .

42. Procédé selon la revendication 41, dans lequel le panier (1230) comporte des ressorts (1244), le panier (1230) étant disposé de façon mobile sur ceux-ci, le dispositif de commande (1260) commandant la fréquence du dispositif d'activation en vue de maintenir la vibration du panier (1230) à la fréquence de résonance naturelle du panier (1230).

43. Procédé selon la revendication 41 ou 42, dans lequel le panier (1230) comprend un matériau à traiter, le procédé comportant, en outre, l'étape comprenant de commander la fréquence du dispositif d'activation afin de maintenir la vibration du panier (1230) lorsque le matériau s'y écoule et traverse la, au moins une, surface de criblage dans le panier (1230) à la fréquence de résonance naturelle du panier (1230) lorsqu'il est utilisé.

44. Procédé selon la revendication 41, dans lequel le panier (1230) comporte des résonateurs (1250), le panier (1230) étant monté de façon mobile sur ceux-ci, le dispositif de commande (1260) commandant la fréquence du dispositif d'activation afin de maintenir la vibration du panier (1230) à la fréquence de résonance naturelle du panier (1230) lorsqu'il est utilisé.

45. Procédé selon l'une quelconque des revendications 41 à 44, dans lequel le séparateur vibrant comporte un appareil de réglage d'inclinaison raccordé au panier (1230), le procédé comprenant, de plus, l'étape consistant à régler l'angle du panier (1230) par l'intermédiaire de l'appareil de réglage d'inclinaison.

46. Procédé selon l'une quelconque des revendications 41 à 45, dans lequel le dispositif d'activation comporte un appareil de commande de fréquences variables permettant de commander, de façon sélective, le dispositif vibratoire électromagnétique (1240), un dispositif de capteur (1270) étant raccordé au séparateur vibrant pour détecter un paramètre indicateur du fonctionnement du séparateur vibrant en vue de fournir un signal correspondant au dit paramètre, et le dispositif de commande (1260) permettant de recevoir les signaux provenant du dispositif de capteur (1270), pour commander le séparateur vibrant sur la base desdits signaux, le procédé comportant, de plus, l'étape consistant à commander le dispositif de commande de fréquence variable au moyen du dispositif de commande.

47. Procédé selon la revendication 46, dans lequel le dispositif de commande (1260) sert à signaler automatiquement au dispositif de commande de fréquence variable de modifier la fréquence du dispositif vibratoire électromagnétique (1240) de façon à ce que la force appliquée au panier (1230) soit modifiée.

48. Procédé selon la revendication 47, dans lequel le panier (1230) contient un fluide chargé de matières solides, le dispositif de commande (1260) modifiant en continu la fréquence afin de maintenir, de façon continue, le panier (1230) en vibrations à la fréquence de résonance naturelle du panier (1230) et le fluide chargé de matières solides.

49. Procédé selon l'une quelconque des revendications 41 à 48, dans lequel le dispositif de commande (1260) commande au dispositif d'activation de désobstruer la surface de criblage.

50. Procédé selon l'une quelconque des revendications 41 à 49, dans lequel, sur la base de ladite fréquence de résonance naturelle, on détermine une mesure des matières solides évacuées à partir du séparateur vibrant.

51. Procédé selon l'une quelconque des revendications 41 à 50, dans lequel le séparateur vibrant est un tamis vibrant et le matériau est un fluide de forage contenant des matières solides.

52. Procédé selon l'une quelconque des revendications 41 à 50, le séparateur vibrant comprenant, de plus, un dispositif de capteur de flux pour détecter l'écoulement du matériau sur la, au moins une, surface de criblage, le dispositif de capteur de flux étant commandé par, et en communication avec, le dispositif de commande (1260), et le dispositif de commande (1260) permettant de régler le fonctionnement du tamis en réponse au signaux provenant du dispositif de capteur de flux.

53. Procédé selon l'une quelconque des revendications 41 à 52, le séparateur vibrant comprenant, de plus, un dispositif de capteur de flux pour détecter l'écoulement du matériau sur la, au moins une, surface de criblage dans lequel le dispositif de commande (1260) peut, de façon automatique, arrêter le séparateur vibrant sur la base d'un paramètre du matériau ou sur la base de la vitesse d'écoulement du matériau.
